# EUROPÄISCHE PATENTANMELDUNG

(11) **EP 1 997 375 A2**
(43) Veröffentlichungstag der Anmeldung: **03.12.2008**
(21) Anmeldenummer: 08009915.3
(22) Anmeldetag: 30.05.2008
(51) Int. Cl.: A01N 25/02, A01P 7/04

(54) **Mittel zur Zeckenentfernung**

(30) Priorität: 31.05.2007 DE 102007025609
(71) Anmelder: Meyer, Ulrich, 29664 Walsrode (DE)
(72) Erfinder: Meyer, Ulrich, 29664 Walsrode (DE)
(74) Vertreter: Kröncke, Rolf

(57) **Zusammenfassung**

Die vorliegende Erfindung betrifft die Verwendung von Verbindungen, die eine neurogene oder myogene Lähmung und gegebenenfalls Tötung auslösen zum Entfernen von Zecken nach einem Zeckenstich sowie Zusammensetzungen solche Verbindungen enthaltend.

## Beschreibung

Die Erfindung betrifft die Verwendung von Verbindungen, die eine lähmende Wirkung auf die Muskulatur von Zecken haben oder solche Verbindungen enthaltene Zusammensetzungen zum Entfernen von Zecken nach einem Zeckenstich. Bei diesen Verbindungen handelt es sich insbesondere um Nervengifte, oder Narkotika oder Anästhetika aber auch Muskelrelaxanzien, die eine neurogene Lähmung oder myogene Lähmung der Zecke bewirken.

### Stand der Technik

Zeckenstiche sind insbesondere beim Menschen häufig Ursache von Erkrankungen. Solche Erkrankungen breiten sich derzeit in Deutschland und anderen Staaten erschreckend schnell aus. Die von Zecken übertragenen Erkrankungen schließen dabei z.B. Krankheiten wie Ehrlichiose, Frühsommer-Meningoenzephalitis (FSME) oder Borreliose (Borrelia burgdorferi) ein. Dabei werden von der Zecke die Krankheitserreger, wie z.B. Borrelia burgdorferi, auf den Wirt, wie den Menschen, übertragen.

Zecken sind eine Überfamilie innerhalb der Milben und gehören zur Klasse der Spinnentiere. Sie durchlaufen im Zeitraum ihres Lebenszyklus verschiedene Nymphenstadien. Beim Zeckenstich dringt das Mundwerkzeug der Zecke durch die Haut in das Gewebe des Wirtes ein und das Tier leckt das herauslaufende Blut bzw. die Lymphe auf. Beim Zeckenstich, der umgangssprachlich auch als Zeckenbiss bezeichnet wird, geben die blutsaugenden Insekten vor Beginn der Aufnahme eine kleinere Menge Sekret, ihren Speichel, ab, der verschiedene Funktionen ausübt. So wird ein Gerinnungshemmer in die Wunde eingebracht, um den Blutfluss zu steigern. Mit Hilfe eines Klebstoffes, der in dem Sekret vorhanden ist, wird das Mundwerkzeug fest in die Haut verankert. Ein Betäubungsmittel wird eingebracht, um die Einstichstelle unempfindlich zu machen und schließlich wird ein entzündungshemmender Wirkstoff übertragen, der eine Stimulation der körpereigenen Immunabwehr vermeiden soll.

Die in Deutschland am häufigsten vorkommende Schildzecke, auch als Holzbock bezeichnet, lebt im Freien, vorzugsweise an Waldrändern, an Lichtungen oder an Bächen. Auch Gärten werden gerne als Lebensräume akzeptiert. Sie bewegen sich am Boden, im hohen Gras oder im Gebüsch oder Unterholz.

Üblicherweise befällt die Zecke den Wirt, wenn dieser sich durch hohes Gras oder im Unterholz fortbewegt, insbesondere durch Abstreifen gelangt die Zecke auf den Wirt. Erstmal auf dem Wirt gelangt, sucht die Zecke sich häufig dunkle und feuchte Körperhöhlungen, um dort den Wirt zu stechen.

Ein Befall mit einer Zecke wird daher erst häufig sehr spät und bereits nach längerer Saugtätigkeit der Zecke beobachtet.

Ein Problem bei .Zecken, ist deren rechtzeitige , und sachgemäße Entfernung, insbesondere um durch die Zecken übertragene Erkrankungen zu verhindern.

Die rechtzeitige und sachgemäße Entfernung der Zecke aus der Haut des Wirts ist somit Prävention und Therapie zugleich, wobei unter sachgemäßer Entfernung das Herausziehen der unbeschädigten Zecke aus dem Wirt verstanden wird, ohne dass die Zecke gequetscht oder anderweitig gestresst wird, so dass Infektionen dadurch erst verursacht werden.

Es sind in der Literatur verschiedenste Verfahren zum Entfernen von Zecken beschrieben. Diese Verfahren umfassen mechanische Verfahren als auch kombinierte physiko-chemische Verfahren.

So wird das Entfernen einer Zecke mittels einer Pinzette unter gleichzeitiger Drehung gegen den Uhrzeigersinn vorgeschlagen, wobei darauf zu achten ist, dass der Kopf des Insekts nicht abgerissen wird.

Allerdings ist es ausgesprochen schwierig mit einer Pinzette unter Drehbewegung und gleichzeitig einer Greif-Druck-Bewegung, die Zecke herausziehen, ohne dass eine Quetschung derselben oder ein Abreißen des Kopfes erfolgt.

Herkömmliche Verfahren zum Entfernen von Zecken bewirken allerdings eine Quetschung der Zecke, wenn diese fest erfassend entfernt werden soll. Insbesondere bei Zecken mit infektiösem Inhalt bewirkt diese Art der Entfernung das Herausquetschen infektiösen Materials und löst dadurch erst die Erkrankung aus. In der Fachliteratur wird z.B. zum korrekten Entfernen einer Zecke eine spitze Pinzette, eine Zeckenzange oder ähnliches empfohlen, um eine Quetschung zu minimieren. Diese mechanischen Verfahren sollten auch dem im Folgenden beschriebenen physiko-chemischen Verfahren vorgezogen werden, da diese bei chemischer Behandlung ihren Darm entleeren können.

So wird, um eine Zecke völlig unversehrt aus der Haut herauszubekommen, ferner das Auftragen von Klebstoff, Nagellack, Öl oder Fett empfohlen. Dadurch wird dem Insekt die Atemluft abgeschnitten. Es löst seine Zangen bzw. Widerhaken, um aus dieser Lage zu entkommen und den Standort zu wechseln. Allerdings können auch bei diesen Verfahren die Zecke noch ihre Sekrete freisetzen und so eine Infektion des Wirtes fördern.

Die Freisetzung von Sekreten bei Zecken einschließlich dem Magen- und Darminhalt wird insbesondere auch durch Auslösen von Stress bei der Zecke hervorgerufen. D.h., wenn versucht wird mit Pinzette oder Öl eine Zecke zu entfernen, werden als Reaktion auf diesen Stress von der Zecke Sekrete in den Wirt eingebracht und dadurch die Infektion ausgelöst. Alternativ wurde der Einsatz von Kältesprays vorgeschlagen. Ein Besprühen mit Kältespray würde aber auch die umgebende Haut verletzen. Des Weiteren kommt es hier nur zu einer kurzen Betäubung der Zecke.

Es gibt weiterhin z.B. in der Veterinärmedizin verschiedene, einen Zeckenstich vorbeugende Zusammensetzungen, eine sogenannte präventive Behandlung, die repellent wirkende Substanzen enthalten bzw. Substanzen, die in oder auf der Haut des Individuums vorliegen und bei Kontakt mit einer Zecke diese töten. Diese Substanzen sind aber nicht bei einem bereits geschehenen Zeckenstich einsetzbar.

Der Erfindung liegt die Aufgabe zugrunde, ein einfaches Mittel bereitzustellen, das von einem Zeckenstich betroffene Individuen, wie Menschen und Tiere, wie Säugetiere, eine schnelle und einfache Möglichkeit gibt, einen aufgetretenen Zeckenbefall sofort zu bekämpfen und die Zecke einfach, d.h. ohne Auslösen einer Stressreaktion bei der Zecke, zu entfernen.

### Beschreibung der Erfindung

Erfindungsgemäß werden zur Lösung des oben genannten Problems Verbindungen oder solche Verbindungen enthaltene Zusammensetzungen in fluider Form verwendet, die lähmend auf die Zecke wirken und/oder deren Tod hervorrufen und damit eine Entfernung der Zecke von der Haut des Individuums nach dem Zeckenbiss erlauben, ohne dass diese z.B. stressbedingt ihre Sekrete und Flüssigkeiten in den Wirt einbringt.

In einer bevorzugten Ausführungsform sind diese "lähmenden" bzw. tötenden Verbindungen solche, die eine Paralyse oder Parese der Zecke bewirken. Insbesondere eignen sich hierfür Nervengifte, um eine neurogene Lähmung zu erzielen, aber auch Verbindungen, wie Narkotika oder Anästhetika, die eine myogene Lähmung der Zecke bewirken.

Erfindungsgemäß wurde festgestellt, dass zur Vermeidung von durch Zecken übertragenen Infektionen die Entfernung der Zecke von dem Wirt so zu geschehen hat, dass die Zecke keine Gelegenheit hat, durch Ausstoßen ihrer Sekrete in den Wirt eine Infektion zu ermöglichen. Hierzu werden Verbindungen eingesetzt, die eine lähmende und/oder tötende Wirkung auf die Zecke ausüben. Bei dieser lähmenden Wirkung kann es sich einerseits um eine neurogene Lähmung als auch um eine myogene Lähmung handeln. Durch die unmittelbar bei Auftragen der erfindungsgemäßen Verbindungen eintretende Lähmung und/oder Tötung des Tieres wird verhindert, dass diese als Antwort auf den Versuch sie vom Wirt zu trennen, durch Ausstoß von Sekreten, die infektionsauslösende Mikroorganismen enthalten, diese überträgt.

In einer bevorzugten Ausführungsform handelt es bei den erfindungsgemäß verwendeten Verbindungen um Nervengifte. Diese Nervengifte lösen dabei in der Zecke eine neurogene Lähmung aus. Bevorzugte Nervengifte sind unter anderem Insektizide, wie Pyrethroide und chlorierte zyklische Kohlenwasserstoffe. Dem Fachmann sind weitere geeignete Wirkstoffe bekannt.

Diese Nervengifte, z.B. die Insektizide, werden in solchen Konzentrationen eingesetzt, dass sie eine Lähmung und/oder Tötung der Zecke bewirken, aber für den Wirt, wie für den Menschen oder das Tier, ungefährlich sind. Dieses wird insbesondere dadurch erreicht, dass die Verbindungen lokal direkt an oder auf die Zecke in bevorzugt flüssiger Form appliziert werden.

In einer weiteren bevorzugten Ausführungsform sind die erfindungsgemäß verwendbaren Verbindungen und Zusammensetzungen solche, die eine neurogene Lähmung hervorrufen. Beispielhaft hierfür seien Narkotika, Anästhetika, wie Lokalanästhetika oder Oberflächenanästhetika, genannt. Diese Verbindungen oder Zusammensetzungen bewirken eine Lähmung des Muskelapparates der Zecke, so dass diese nicht mehr ihr Sekret in den Wirt abgeben kann. Geeignet sind z.B. auch Muskelrelaxanzien, die ein Ausstoßen der Sekrete verhindern.

Bevorzugte Narkotika oder Anasthetika sind: Cocainderivate, wie Procain, Tehacain, Lidocain, Mepivacain, Prilocain oder Edidocain. Bevorzugt sind die Verbindungen solche, die eine hohe Toxizität gegenüber der Zecke aufweisen, für den Wirt aber weniger toxisch ist.

Die erfindungsgemäß verwendbare Verbindung oder Zusammensetzung liegt dabei in fluider, wie in flüssiger Form vor. Alternativ können die Verbindungen oder Zusammensetzungen als Spray oder ähnliches verwendet werden.

Die Zusammensetzungen, die die erfindungsgemäßen Verbindungen enthalten, können weiterhin Trägerstoffe und/oder andere Hilfsstoffe enthalten. Diese weiteren Hilfsstoffe sind solche, die üblicherweise im pharmakologischen Bereich eingesetzt werden und dem Fachmann wohl bekannt.

Wenn die Verwendung in flüssiger Form erfolgt, liegen die erfindungsgemäßen Verbindungen oder Zusammensetzungen als Creme, Gel, Salbe, Lotion, Tinktur, Füssigkeit usw. vor. Alternativ liegen die Verbindungen oder Zusammensetzungen als sprühfähige Fluidlösungen, z.B. als Lotion, vor.

Die Konzentration an der eine Lähmung oder Tötung hervorrufenden Verbindung in der erfindungsgemäßen Zusammensetzung hängt von dem eingesetzten Wirkstoff und der Darreichungsform ab. Der Fachmann kann einfach die entsprechenden Dosierungen bestimmen.

Bevorzugt werden die erfindungsgemäßen Verbindungen oder Zusammensetzungen topisch eingesetzt, z.B. in Form eines Sprays oder als Flüssigkeit, z.B. als Tinktur.

Bei Befall mit einer Zecke können umgehend nach Auffinden der Zecke die erfindungsgemäßen Verbindungen bzw. Zusammensetzungen bevorzugt auf die Zecke direkt aufgebracht werden, so dass eine sofortige Lähmung und/oder Tötung der Zecke eintritt.

Besonders bevorzugt liegen die erfindungsgemäßen Verbindungen und Zusammensetzungen als Flüssigkeit vor, z.B. gelöst in H₂O oder einer Salzlösung. Diese kann dann z.B. mit Hilfe einer Pipette direkt auf die Zecke aufgebracht werden.

Anschließend kann die Zecke einfach von der Haut entfernt werden, ohne dass eine Quetschung oder andere Stresssituation der Zecke vermieden werden muss. Teilweise fällt die Zecke auch von alleine ab. Die erfindungsgemäßen Verbindungen und Zusammensetzungen sind insbesondere vorteilhaft für z.B. Wanderer oder Spaziergänger, die die erfindungsgemäßen Verbindungen und Zusammensetzungen in Form eines Sprays oder einer Tinktur mitführen können und somit unmittelbar nach Erkennen eines Befalls die Zecke bekämpfen können.

Durch die unmittelbare Lähmung der Zecke kann der Spaziergänger oder Wanderer selbst die Zecke gefahrlos entfernen, ohne dass diese durch Auslösen einer Stressreaktion noch Sekrete in die Wunde des Betroffenen ausstoßen kann.

Anschließend kann die Zecke, wie bereits erwähnt, entfernt werden. Dieses Entfernen kann durch bekannte Mittel, wie bekannte Zeckenzangen oder andere Werkzeuge erfolgen oder einfach per Hand. Nach Entfernen der Zecke kann sich z.B. eine Desinfektion oder Reinigung des betroffenen Bereiches anschließen, um die erfindungsgemäßen Wirkstoffe abzuwaschen.

Bevorzugt weist die erfindungsgemäße Zusammensetzung neben den genannten Verbindungen noch weitere Inhaltsstoffe auf, die eine bakterizide und/oder virozide Wirkung besitzen. Dadurch können eventuell bereits ausgetretene infektiöse Mikroorganismen in oder an der Wunde getötet werden.

Ein wesentlicher Aspekt ist, dass die Zecke nach dem Zeckenbiss sehr schnell gelähmt bzw. getötet wird, um ein Erbrechen des Magen- und Darminhalts in die Wunde zu verhindern. Die Lösung muss dabei lang anhaltend sein, damit die Zecke im gelähmten Zustand entfernt werden kann. Nach Lähmung oder Tötung auf chemischem Wege kann gegebenenfalls die Zecke mechanisch entfernt werden.

Sollte bereits eine Infektion erfolgt sein, kann eine anschließende Behandlung derselben, z.B. mit Antibiotika, erfolgen.

Vorliegend erfasst der Ausdruck "Individuum" alle Arten von Tieren, insbesondere Säugetieren und besonders Menschen. Säugetiere umfassen Haustiere oder Nutztiere, wie Hund, Katze, Kaninchen, Menschen, Kuh, Schwein, Pferd, etc.

Im Folgenden wird die Erfindung mit Hilfe von Beispielen weiter beschrieben. Diese Beispiele sollen den Erfindungsgegenstand aber nicht darauf beschränken.

### BEISPIELE

### Beispiel 1

Zusammensetzung einer Lösung zur Entfernung von Zecken
2g/kg (0,2 Gew.-%) Pyrethrum
5g/kg (0,5 Gew.-%) Piperonylbutoxid
gelöst in einer Salzlösung bzw. in H₂O ad 1 kg.

### Beispiel 2

### Verwendung einer erfindungsgemäßen Zusammensetzung

Die im Beispiel 1 beschriebene erfindungsgemäße Zusammensetzung wurde nach Feststellen des Vorhandenseins einer Zecke appliziert, dabei wurde die Lösung mit einer Pipette direkt auf das Tier aufgetragen.

Die bewegungslose Zecke konnte unmittelbar nach Auftragen der erfindungsgemäßen Zusammensetzung einfach von der Haut per Hand oder mit einer Pinzette entfernt werden, ohne dass die Beißwerkzeuge oder der Kopf der Zecke in der Stichstelle verblieb. Anschließend wurde der Bereich gesäubert, um den verbleibenden Wirkstoff von der Haut zu entfernen.

## Patentansprüche

1. Verwendung von bei einer Zecke eine Lähmung und/oder den Tod auslösenden Verbindungen oder solche Verbindungen enthaltende Zusammensetzungen in flüssiger Form zum Entfernen von Zecken von der Haut eines Individuums nach einem Zeckenbiss, insbesondere eines **Säugetiers, wie einem Menschen.**

2. Verwendung nach Anspruch 1, **dadurch gekennzeichnet, dass** die Verbindungen, die eine Lähmung und/oder den Tod einer Zecke hervorrufen, eine Paralyse oder Parese der Zecke bewirken.

3. Verwendung nach Anspruch 1 oder 2, **dadurch gekennzeichnet, dass** die Verbindungen Nervengifte zur neurogenen Lähmung sind.

4. Verwendung nach Anspruch 1 oder 2, **dadurch gekennzeichnet, dass** die Verbindungen Verbindungen zur myogenen Lähmung sind.

5. Verwendung nach Anspruch 1 oder 2, **dadurch gekennzeichnet, dass** die Verbindungen Anästhetika, insbesondere Lokalanästhetika oder Oberflächenanästhetika, sind.

6. Verwendung nach einem der vorherigen Ansprüche, **dadurch gekennzeichnet, dass** die Verbindungen oder Zusammensetzungen zur lokalen Applikation vorliegen.

7. Verwendung nach einem der Ansprüche 1 bis 5, **dadurch gekennzeichnet, dass** die Verbindungen oder Zusammensetzungen in einer Form vorliegen derart, dass die Zecken mit den Verbindungen oder Zusammensetzungen besprüht werden können.

8. Verwendung nach einem der vorherigen Ansprüche, **dadurch gekennzeichnet, dass** die Verbindungen oder Zusammensetzungen zur topischen Anwendung vorliegen.

9. Verwendung nach einem der vorherigen Ansprüche, **dadurch gekennzeichnet, dass** die Verbindungen oder Zusammensetzungen in flüssiger Form vorliegen derart, dass diese Flüssigkeit lokal auf die Zecke appliziert werden kann, bevorzugt mit Hilfe einer Pipette.

10. Zeckenentfernungsmittel in fluider Form das als wirksamen inhaltsstoff eine Verbindung oder eine Zusammensetzung wie in den Ansprüchen 1 bis 5 definiert und gegebenenfalls weitere pharmazeutisch annehmbare Hilfsmittel und Träger enthält.

11. Zeckenentfernungsmittel nach Anspruch 10, weiterhin enthaltend virozid oder bakterizid wirkende Verbindungen.
